# EUROPÄISCHE PATENTSCHRIFT

(11) **EP 0 903 008 B1**
(45) Veröffentlichungstag und Bekanntmachung des Hinweises auf die Patenterteilung: **31.10.2001**
(21) Anmeldenummer: 97927122.8
(22) Anmeldetag: 03.06.1997
(51) Int. Cl.: H02P 6/00

(54) **ANORDNUNG MIT EINEM ELEKTRONISCH KOMMUTIERTEN MOTOR**
ARRANGEMENT WITH A MOTOR WITH AN ELECTRONIC COMMUTATOR
DISPOSITIF A MOTEUR COMMUTE ELECTRONIQUEMENT

(30) Priorität: 07.06.1996 DE 29610083 U
(43) Veröffentlichungstag der Anmeldung: 24.03.1999
(73) Patentinhaber: PAPST-MOTOREN GMBH & CO. KG, 78112 St Georgen (DE)
(72) Erfinder: KARWATH, Arno, D-78628 Rottweil (DE)
(86) Internationale Anmeldenummer: EP9702880
(87) Internationale Veröffentlichungsnummer: WO9748178

(56) Entgegenhaltungen:
- EP-A- 0 318 938
- EP-A- 0 467 085
- DE-A- 4 305 767
- DE-A- 4 344 448

## Beschreibung

Die Erfindung betrifft eine Anordnung mit einem elektronisch kommutierten Motor, welcher im Betrieb aus einem Wechselstromnetz über einen an dieses angeschlossenen Gleichrichter, und einen an diesen Gleichrichter angeschlossenen Gleichstrom-Zwischenkreis, mit einer Gleichspannung von über 100 V versorgt wird. Eine solche Anordnung ist aus der EP 318 938 bekannt geworden.

Da bei derartigen Anordnungen zwischen dem elektronisch kommutierten Motor (ECM) und dem Wechselstromnetz häufig kein Transformator vorgesehen ist, ist der ECM nicht galvanisch vom Wechselstromnetz getrennt, und dies erfordert besondere Schutzmaßnahmen, um bei etwaigen Isolationsschäden oder dergleichen eine Gefährdung des Benutzers auszuschließen.

Es ist deshalb eine Aufgabe der Erfindung, eine neue Anordnung der eingangs genannten Art bereitzustellen.

Nach der Erfindung wird diese Aufgabe gelöst durch eine Anordnung mit einem elektronisch kommutierten Motor, welcher im Betrieb aus einem Wechselstromnetz über einen an dieses angeschlossenen Gleichrichter, und einen an diesen Gleichrichter angeschlossenen Gleichstrom-Zwischenkreis, mit einer Gleichspannung von über 100 V versorgt wird, mit einer über einen Transformator aus diesem Wechselstromnetz gespeisten Anordnung zur Versorgung elektronischer Elemente des Motors mit einer Gleichspannung, und mit einer zur Übermittlung von Informationen vom oder zum Motor vorgesehenen Benutzerschnittstelle, welche vom Motor galvanisch getrennt ist und welcher eine vom Motor galvanisch getrennte Stromversorgung zugeordnet ist, mit einer in der Benutzerschnittstelle vorgesehenen Vergleicheranordnung, welcher eine durch Gleichrichtung einer netzabhängigen Wechselspannung erzeugte wellige Gleichspannung zugeführt und dort mit einem vorgegebenen Signal verglichen wird, um ein pulsweitenmoduliertes Signal zu erzeugen, dessen Tastverhältnis durch das vorgegebene Signal definiert ist, und mit einer Vorrichtung zur galvanisch getrennten Übertragung dieses pulsweitenmodulierten Signals von der Benutzerschnittstelle zum Motor. Durch die galvanische Trennung wird erreicht, daß die Benutzerschnittstelle potentialmäßig vom Motor und damit vom Wechselstromnetz getrennt ist, so daß eine Gefährdung des Benutzers bzw. Bedieners auch bei Störungen bzw. Schäden am Motor sicher ausgeschlossen wird. Das pulsweitenmodulierte Signal kann problemlos zum Motor übertragen werden, z.B. über einen Trennübertrager, einen Lichtleiter, oder einen Optokoppler.

Die Erfindung ermöglicht es, der Benutzerschnittstelle ein analoges Signal für die gewünschte Drehzahl zuzuführen, dieses analoge Signal innerhalb der Benutzerschnittstelle kostengünstig in digitale Signale mit einem signalabhängigen Tastverhältnis umzusetzen, und diese digitalen Signale mit Hilfe eines Optokopplers zur Steuerelektronik des Motors zu übertragen, damit sie dort weiterverarbeitet werden können.

Dabei geht man mit besonderem Vorteil so vor, daß der Transformator eine isolierte Wicklungskammer aufweist, in welcher eine separate Niederspannungswicklung vorgesehen ist, welche zur galvanisch getrennten Stromversorgung der Benutzerschnittstelle dient. Dadurch, daß diese separate Niederspannungswicklung in einer isolierten Wicklungskammer angeordnet ist, ergibt sich eine galvanische Trennung, die z.B. eine Prüfspannung von 4000 V erlaubt. Dabei ist es nicht notwendig, für diesen Zweck einen separaten Trenntransformator vorzusehen, sondern derselbe Transformator kann auch zur Speisung der Motorelektronik mit Niederspannung dienen, wobei dann die hierfür vorgesehene Wicklung in eine Kammer mit der Primärwicklung, und separat von der erwähnten separaten Niederspannungswicklung, gewickelt werden kann.

Eine weitere vorteilhafte Weiterbilldung der Erfindung zeichnet sich dadurch aus, daß die Ausgangsspannung der separaten Niederspannungswicklung in Form einer gleichgerichteten welligen Gleichspannung und in Form einer geglätteten Gleichspannung der Benutzerschnittstelle zuführbar ist. Die wellige Gleichspannung ermöglicht in besonders einfacher Weise eine Digitalisierung analoger Signale, welche der Benutzerschnittstelle zugeführt werden, z.B., um die Drehzahl des Motors mittels eines solchen analogen Signals zu bestimmen.

Eine weitere bevorzugte Ausgestaltung der Erfindung zeichnet sich dadurch aus, daß zur galvanisch getrennten Übertragung von Signalen von oder zur Benutzerschnittstelle mindestens ein Optokoppler vorgesehen ist. Durch die Verwendung eines Optokopplers ergibt sich automatisch eine galvanische Trennung. Hierbei geht man in weiterer Ausgestaltung der Erfindung bevorzugt so vor, daß die Signale über den mindestens einen Optokoppler in digitalisierter Form übertragen werden. Man erhält so eine sichere Signalübertragung bis herunter zur Frequenz 0.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen. Es zeigt:
- Fig. 1: ein Blockschaltbild zur Erläuterung des Aufbaus einer erfindungsgemäßen Anordnung,
- Fig. 2: Einzelheiten der Anordnung nach Fig. 1, und
- Fig. 3: eine schematische Darstellung eines Netztransformators, dessen Wickelkörper zwei voneinander isolierte Wickelkammern hat, sowie eine bevorzugte Anordnung der Wicklungen des Transformators in diesen Wickelkammern.

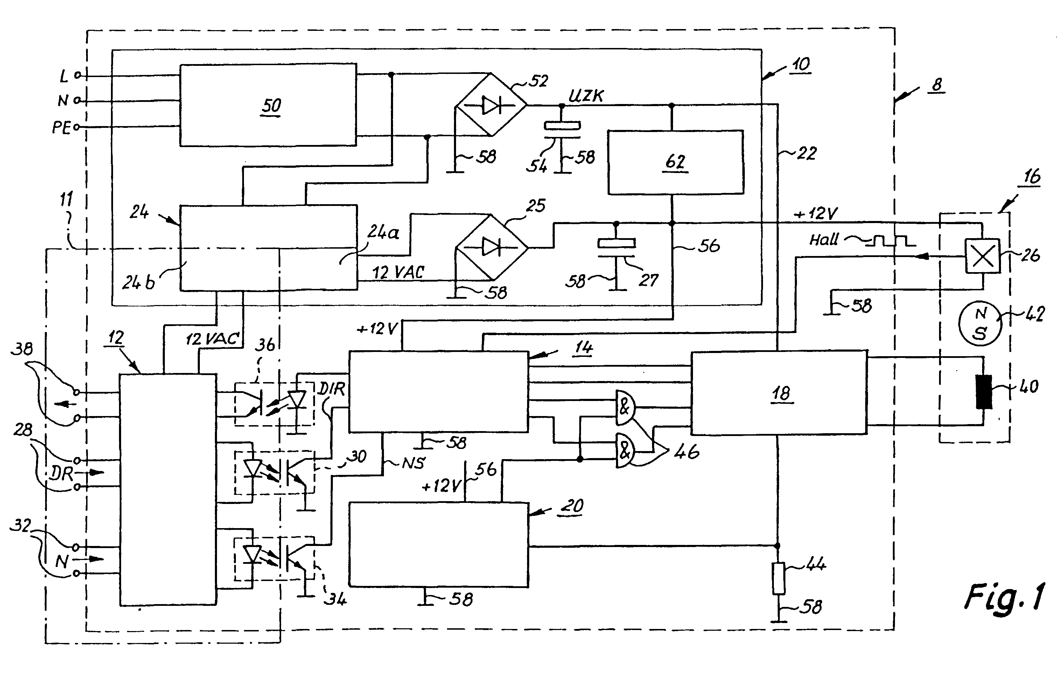

Fig. 1 zeigt anhand eines Blockschaltbilds eine erfindungsgemäße Anordnung 8. Sie enthält ein Netzteil 10, eine hiervon durch eine symbolisch angedeutete galvanische Trennung 11 getrennte Benutzerschnittstelle 12, eine Kommutierungselektronik 14 für das Kommutieren eines elektronisch kommutierten Motors (ECM) 16 mittels einer Leistungs-Endstufe 18, und eine Strombegrenzungsanordnung 20 für die Begrenzung des durch den Motor 16 fließenden Stromes auf einen vorgegebenen Maximalwert, z.B. beim Start des Motors, oder wenn dieser überlastet wird.

Das Netzteil 10 erzeugt eine Spannung U_{ZK} (Zwischenkreisspannung) an einem Gleichstrom-Zwischenkreis 22. Sofern die Netzspannung 220 V Wechselstrom ist, beträgt U_{ZK} etwa 320 V Gleichspannung, mit der der ECM 16 direkt gespeist wird, also ohne Zwischenschaltung eines Transformators. Entsprechende Motorschaltungen sind beispielhaft dargestellt in EP 0 467 085 A1 oder DE-UM 9 414 498.2. Wegen der relativ hohen Spannung ist es erforderlich, die Benutzerschnittstelle 12 durch die galvanische Trennung 11 elektrisch vollständig gegen den Motor 16 zu isolieren.

Über einen Transformator 24 erzeugt das Netzteil 10 eine niedrige Gleichspannung von z.B. 12 V für die Kommutierungselektronik 14 und einen im Motor 16 vorgesehenen Hallgenerator 26, dessen digitales Ausgangssignal "Hall" (bei Verwendung eines Hall-IC) wie dargestellt der Kommutierungselektronik 14 zugeführt wird, um dieser eine Information über die augenblickliche Stellung eines Rotors 42 zu liefern. Zum Erzeugen dieser niedrigen Spannung von 12 V dient eine erste Sekundärwicklung 24a des Transistors 24, deren Ausgangsspannung mittels eines Brückengleichrichters 25 gleichgerichtet und mittels eines Kondensators 27 geglättet wird.

Der Transformator 24 hat ferner eine zweite Sekundärwicklung 24b, welche von seiner Primärwicklung 24c und der ersten Sekundärwicklung 24a durch eine durchgehende Isolation getrennt ist, z.B. dadurch, daß die Primärwicklung 24c und die erste Sekundärwicklung 24a gemeinsam in eine erste Kammer des Transformator-Wicklungskörpers gewickelt sind, während die zweite Sekundärwicklung 24b separat in eine zweite, von der ersten Kammer isolierte Wicklungskammer des Transformators 24 gewickelt ist.
Diese zweite Sekundärwicklung 24b liefert. ebenfalls eine Wechselspannung, z.B. von 12 V, für die Speisung der Benutzerschnittstelle 12.

An Eingängen 28 der Benutzerschnittstelle 12 kann der Benutzer über ein Signal DR die Drehrichtung des Motors 16 vorgeben, und diese Information wird als Signal DIR über einen Optokoppler 30 zur Kommutierungssteuerung 14 übertragen.

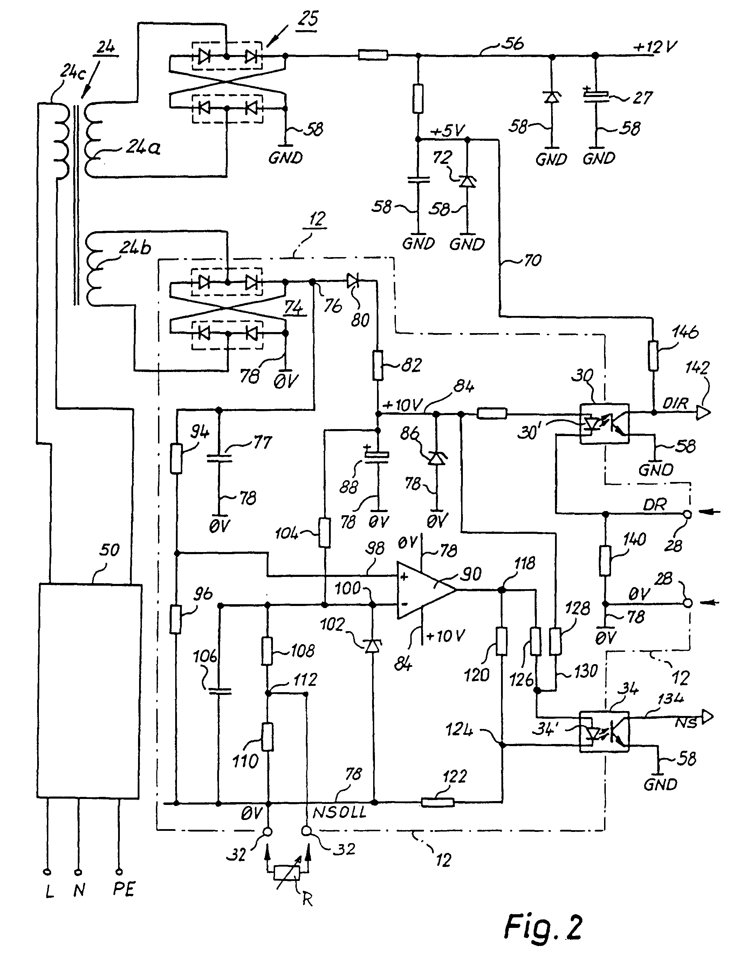

An Eingängen 32 der Benutzerschnittstelle 12 kann der Benutzer über ein Signal N_{SOLL} eine gewünschte Drehzahl N vorgeben, z.B. 4300 n, entweder in Form einer Gleichspannung, eines PWM-Signals, oder einfach in Gestalt eines variablen Widerstands R (Fig. 2), also eines passiven Bauteils (Potentiometers), und ein entsprechendes digitales Signal NS für die gewünschte Drehzahl wird dann über einen Optokoppler 34 der Kommutierungssteuerung 14 zugeführt.

Außerdem kann von der Kommutierungssteuerung 14 ein Signal für die augenblickliche Drehzahl entnommen werden, z.B. das bereits erwähnte digitale Signal Hall. Dieses Signal wird über einen Optokoppler 36 in digitalisierter Form zur Benutzerschnittstelle 12 übertragen, dort in ein analoges Signal umgewandelt, und steht dort an Ausgängen 38 zur Verfügung, z.B. zum Betrieb eines Instruments, das die augenblickliche Drehzahl anzeigt.

Wie man ohne weiteres erkennt, ist die Benutzerschnittstelle 12 elektrisch komplett gegen den Rest der Anordnung 8 isoliert, so daß ein Benutzer bei Kontakt mit der Benutzerschnittstelle 12 keinerlei Gefahren elektrischer Art ausgesetzt ist.

Der Motor 16 hat bei der dargestellten Ausführungsform einen einzigen Statorwicklungsstrang 40. Sein permanentmagnetischer Rotor ist bei 42 symbolisch angedeutet. Der Strom durch den Strang 40 fließt durch einen Meßwiderstand 44, und die Spannung an diesem wird durch die Strombegrenzungsanordnung 20 überwacht. Wird diese Spannung zu groß, so schaltet die Strombegrenzung 20 über die beiden UND-Glieder 46 die Leistungs-Endstufe 18 kurzzeitig aus, so daß der Strom durch den Wicklungsstrang 40 entsprechend abnimmt.

Am Eingang des Netzteils 10 befindet sich ein EMV-Filter 50, dem über Eingangsklemmen L, N eine Wechselspannung von z.B. 220 V zugeführt wird. Mit PE ist der Nulleiter der Netzspannung bezeichnet. Aufgabe des Filters 50 ist die Einhaltung der vorgeschriebenen Störgrenzwerte. Die vom Filter 50 gefilterte Netzspannung wird direkt mittels eines Vollbrücken-Gleichrichters 52 gleichgerichtet, mittels eines Kondensators 54 geglättet, und über die Leitung 22 der Leistungs-Endstufe 18 des Motors 16 zugeführt. Die Endstufe 18 und somit auch die Motorwicklung 40 werden dadurch mit ca. 320 V Gleichspannung betrieben. Da die Kommutierungselektronik 14 nur mit Niederspannung betrieben werden kann, benötigt man hierfür den Transformator 24. Das negative Potential der Gleichspannung von 12 V, deren positives Potential an einer Leitung 56 liegt, ist mit dem negativen Potential der Spannung U_{ZK} verbunden, wie durch die gemeinsamen Masseanschlüsse 58 dargestellt. Es gibt folglich keine galvanische Trennung zur Netzspannung an den Eingängen L, N.

Da die Zwischenkreisspannung U_{ZK} und die Gleichspannung von 12 V (an der Leitung 56) das gleiche Massepotential haben, können Primärwicklung 24c und erste Sekundärwicklung 24a des Transformators 24 in die gleiche Kammer eines Wicklungskörpers gewickelt werden. Aus Sicherheitsgründen muß jedoch die Versorgungsspannung der Benutzerschnittstelle 12 von der Netzspannung (an den Klemmen L, N) galvanisch getrennt sein. Zur galvanischen Trennung wird deshalb die zweite Sekundärwicklung 24b bevorzugt in eine separate Kammer des Transformators 24 gewickelt. Durch diesen Aufbau des Transformators 24 sind keine zusätzlichen Isolierungsmaßnahmen erforderlich, und es können preiswerte Zweikammer-Wickelkörper für den Transformator 24 verwendet werden, wodurch sich dessen Kosten in Grenzen halten.

Mit 62 ist eine Netzüberwachung bezeichnet, welche die Spannung U_{ZK} an der Leitung 22 und die Gleichspannung (z.B. + 12 V) an der Leitung 56 überwacht. Der Grund hierfür ist folgender: Beim Einschalten der Anordnung 8, also dem Zuführen von Netzspannung zu den Klemmen L und N, baut sich die Spannung U_{ZK} (an der Leitung 22) sehr rasch auf, während es länger dauert, bis sich die Gleichspannung an der Leitung 56 aufgebaut hat, welche den Hallgenerator 26, die Kommutierungssteuerung 14 und die Strombegrenzung 20 mit Energie versorgt.

Deshalb wäre - ohne die Netzüberwachung 62 - der Schaltzustand der Endstufe 18 nicht eindeutig definiert. Da die Endstufe 18 bevorzugt eine Vollbrückenschaltung ist, könnte dieser nicht eindeutig definierte Schaltzustand zu einem Kurzschluß in dieser Brücke führen.

Ein analoges Problem ergibt sich beim Abschalten der Anordnung 8 vom Netz. Auch hier wird die Gleichspannung an der Leitung 56 wesentlich rascher zu Null als die Spannung U_{ZK} an der Leitung 22, denn beim Abschalten dreht sich der Rotor 42 weiter und liefert so lange generatorisch Energie an den Zwischenkreis, also die Leitung 22, zurück, bis der Rotor steht. Deshalb sinkt U_{ZK} proportional zur Drehzahl des Motors 16, und auch hier kann es - ohne die Netzüberwachung - zu einem Kurzschluß in der Vollbrückenschaltung (in der Endstufe 18) oder zu einer Spannungsüberhöhung an der Endstufe 18 kommen, welche diese ebenfalls gefährdet.

Die Netzüberwachung 62 erfaßt also die Spannung U_{ZK} und die Spannung an der Leitung 56. Wenn letztere zu niedrig wird, und U_{ZK} oberhalb eines vorgegebenen Wertes liegt, führt die Netzüberwachung der Leitung 56 eine Gleichspannung zu, z.B. aus einem hierfür vorgesehenen Akkumulator (nicht dargestellt), oder - mittels eines Spannungsreglers (nicht dargestellt) - von der Leitung 22.

Auf diese Weise wird die Kommutierung des Motors 16 durch die Kommutierungssteuerung 14 direkt ab dem Einschalten gewährleistet, ebenso nach dem Ausschalten bis zum Stillstand des Rotors 42. Auch die Strombegrenzung 20 wird auf diese Weise direkt ab dem Einschalten wirksam und verhindert so eine Überlastung der Endstufe 18 und eine Zerstörung derselben.

**Fig. 2** zeigt den Aufbau der Benutzerschnittstelle 12 im einzelnen. Die Primärwicklung 24c des Transformators 24 wird über das EMV-Filter 50 (Klemmen L, N) an ein (nicht dargestelltes) Wechselstromnetz angeschlossen.

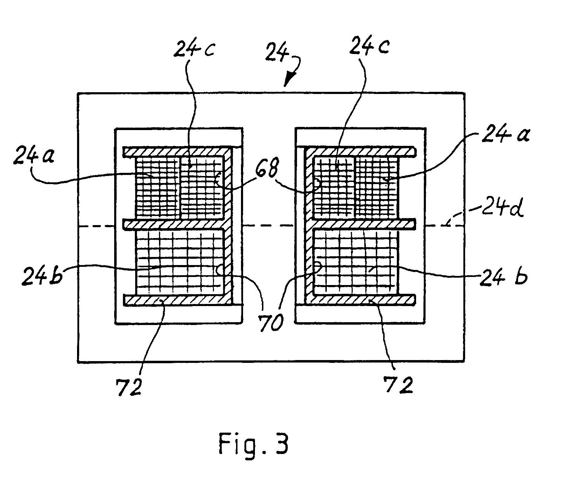

Die Leitung 56 (+ 12 V) wird von der ersten Sekundärwicklung 24a gespeist, die zusammen mit der Primärwicklung 24c in eine Kammer 68 (Fig. 3) eines isolierenden Wickelkörpers 72 des Transformators 24 gewickelt ist, während die zweite Sekundärwicklung 24b in eine hiervon separate zweite Kammer 70 des Wickelkörpers 72 gewickelt ist. Die Trennlinie zwischen den beiden Hälften des Transformatorkerns ist mit 24d bezeichnet.

Die erste Sekundärwicklung 24a speist außerdem eine Leitung 70, an der mittels einer Zenerdiode 72 eine Spannung von +5 V erzeugt wird, jeweils bezogen auf Masse 58.

Die Ausgangsspannung der zweiten Sekundärwicklung 24b wird einem Vollbrücken-Gleichrichter 74 in der Benutzerschnittstelle 12 zugeführt. Sein positiver Ausgang ist mit 76, sein negativer Ausgang mit 78 bezeichnet. Letzterer ist auch mit 0 V bezeichnet, da er nicht mit der Masse 58 des Motors 16 verbunden ist, sondern ein internes Potential der Benutzerschnittstelle 12 darstellt.

Zwischen den Ausgängen 76 und 78 liegt eine pulsierende Gleichspannung mit einer Frequenz von 100 Hz, die in der Benutzerschnittstelle 12 zur Digitalisierung eines dem Eingang 32 zugeführten Signals N_{SOLL} für die gewünschte Drehzahl des Motors 16 dient. (Dieses Signal kann hier als Gleichspannung mit einem Spannungsbereich von z.B. 0 bis 10 V zugeführt werden, oder als impulsbreitenmoduliertes Signal (PWM-Signal), oder einfach dadurch, daß an den Eingang 32 ein verstellbarer Widerstand R (Fig. 2) angeschlossen wird, z.B. ein Potentiometer. Letzteres hat den besonderen Vorteil, daß der Benutzer kein aktives, also Energie lieferndes, Sollwertsignal bereitstellen muß.) Die pulsierende Gleichspannung zwischen den Ausgängen 76 und 78 wird durch einen kleinen Kondensator 77 (z.B. 100 nF) gesiebt, um hochfrequente Komponenten aus der pulsierenden Gleichspannung auszufiltern.

Vom Ausgang 76 führen eine Diode 80 und ein Widerstand 82 zu einer Leitung 84, an der mittels einer Zenerdiode 86 und eines Glättungskondensators 88 eine geglättete Gleichspannung von + 10 V erzeugt wird, die zur Stromversorgung der LEDs 30', 34' der beiden Optokoppler 30, 34 und eines Komparators 90 dient.

Die Sekundärwicklung 24b wirkt also in diesem Fall wie ein Trenntransformator, der die Benutzerschnittstelle 12 galvanisch vom Wechselstromnetz und vom Motor 16 trennt. Die Prüfspannung für die Isolation der Wicklung 24b gegen die anderen Wicklungen kann z.B. 4000 V betragen.

Über einen Spannungsteiler 94, 96 wird die pulsierende Gleichspannung (100 Hz) zwischen den Anschlüssen 76, 78 dem Pluseingang 98 des Komparators 90 zugeführt. Der Minuseingang 100 dieses Komparators wird über eine Zenerdiode 102 und einen Widerstand 104 auf eine vorgegebene Maximalspannung begrenzt. Parallel zu der Zenerdiode 102 liegen zwischen dem Eingang 100 und der Leitung 78 (0 V) ein Kondensator 106 und die Serienschaltung zweier Widerstände 108, 110, deren Verbindungspunkt 112 mit einem der Eingänge 32 verbunden ist, dem ein Signalwert für die gewünschte Solldrehzahl N_{SOLL} zugeführt werden kann, z.B. in Form einer Gleichspannung zwischen 0 und 10 V. Falls die Solldrehzahl in Form eines PWM-Signals zugeführt wird, wird dieses durch den Widerstand 108 und den Kondensator 106 geglättet.

Die pulsierende Gleichspannung am Pluseingang 98 des Komparators 90 kann angenähert als Dreiecksspannung angesehen werden. Ist die Spannung zwischen den Eingängen 32 niedrig, so wird das Potential des Minuseingangs 100 niedrig, und der Ausgang 118 des Komparators 90 wird folglich während jeder Periode der pulsierenden Gleichspannung (100 Hz entsprechen 10 ms) nur kurzzeitig hoch, z.B. während 1 ms, und anschließend während 9 ms niedrig, d.h. es ergibt sich ein niedriges Tastverhältnis am Ausgang 118.

Ist die Spannung zwischen den Eingängen 32 hoch, so wird in entsprechender Weise der Ausgang 118 während jeder Periode der pulsierenden Gleichspannung z. B. während 6 ms hoch und während 4 ms niedrig, d.h. das Tastverhältnis am Ausgang 118 nimmt zu, wenn das Gleichspannungssignal am Eingang 32 größer wird.

Der Ausgang 118 des Komparators 90 ist über die Serienschaltung zweier Widerstände 120, 122 mit der Leitung 78 verbunden. Ihr Verbindungspunkt 124 ist mit der Katode der LED 34' im Optokoppler 34 verbunden.

Ebenso ist der Ausgang 118 über die Serienschaltung zweier Widerstände 126, 128 mit der Leitung 84 (+ 10 V) verbunden. Ihr Verbindungspunkt 130 ist mit der Anode der LED 34' verbunden.

Solange also der Ausgang 118 des Komparators 90 hoch ist, erhält die LED 34' eine Betriebsspannung, leuchtet, und überträgt dadurch das digitale Signal NS zum Ausgang 134 des Optokopplers 34. Ist der Ausgang 118 dagegen niedrig, so erhält die LED 34' keine Spannung und leuchtet folglich nicht. Dadurch erhält man ein entsprechendes Signal NS am Ausgang 134.

Zur Drehrichtungsvorgabe für den Motor 16 kann ein Widerstand 140 zwischen die Eingänge 28 der Benutzerschnittstelle 12 geschaltet werden, wodurch die LED 30' im Optokoppler 30 leuchtet, das Signal DIR am Ausgang 142 des Optokopplers 30 niedrig wird, und der Motor 16 auf eine Drehung entgegen seiner Vorzugsrichtung umgeschaltet wird. Wird der Widerstand 140 weggelassen, so ist die LED 30' stromlos, und das Signal DIR wird hoch, wodurch der Motor 16 auf seine Vorzugsrichtung umgeschaltet wird. Der Ausgang 142 ist über einen Widerstand 146 an die Leitung 70 (+ 5 V) angeschlossen.

Die digitalen Signale DIR und NS sind durch die Optokoppler 34 bzw. 30 galvanisch von der Benutzerschnittstelle 12 getrennt, so daß hier ebenfalls eine galvanische Trennung gegeben ist.

Naturgemäß sind im Rahmen der vorliegenden Erfindung vielfache Abwandlungen und Modifikationen möglich. Z.B. könnte statt der zweiten Sekundärwicklung 24b ein separater Isoliertransformator mit einer entsprechenden Wicklung vorgesehen werden, doch wird die dargestellte Lösung wegen ihrer großen Preiswürdigkeit bevorzugt.

## Patentansprüche

1. Anordnung mit einem elektronisch kommutierten Motor (16), welcher im Betrieb aus einem Wechselstromnetz (L, N) über einen an dieses angeschlossenen Gleichrichter (52), und einen an diesen Gleichrichter (52) angeschlossenen Gleichstrom-Zwischenkreis (22, 58), mit einer Gleichspannung (U_{ZK}) von über 100 V versorgt wird,
mit einer über einen Transformator (24) aus diesem Wechselstromnetz (L, N) gespeisten Anordnung (25, 27) zur Versorgung elektronischer Elemente (14, 20, 26) des Motors (16) mit einer Gleichspannung,
mit einer zur Steuerung des Motors (16) vorgesehenen Benutzerschnittstelle (12), welche vom Motor (16) galvanisch getrennt ist und welcher eine vom Motor (16) galvanisch getrennte Stromversorgung (24b) zugeordnet ist,
mit einer in der Benutzerschnittstelle (12) vorgesehenen Vergleicheranordnung (90), welcher eine durch Gleichrichtung einer netzabhängigen Wechselspannung erzeugte wellige Gleichspannung zugeführt und dort mit einem vorgegebenen Signal (R; N_{SOLL}) verglichen wird, um ein pulsweitenmoduliertes Signal (NS) zu erzeugen, dessen Tastverhältnis durch das vorgegebene Signal (R; N_{SOLL}) definiert ist, und mit einer Vorrichtung zur galvanisch getrennten Übertragung dieses pulsweitenmodulierten Signals (NS) von der Benutzerschnittstelle (12) zum Motor (16).

2. Anordnung nach Anspruch 1, bei welcher der Transformator (24) eine isolierte Wickelkammer (70) aufweist, in welcher eine separate Niederspannungswicklung (24b) vorgesehen ist, welche zur galvanisch getrennten Stromversorgung der Benutzerschnittstelle (12) dient.

3. Anordnung nach Anspruch 2, bei welcher die Ausgangsspannung der separaten Niederspannungswicklung (24b) einem Gleichrichter (74) und von diesem in Form einer gleichgerichteten welligen Gleichspannung und in Form einer geglätteten Gleichspannung der Benutzerschnittstelle (12) zuführbar ist (Fig. 2).

4. Anordnung nach einem oder mehreren der vorhergehenden Ansprüche, bei welcher zur galvanisch getrennten Übertragung von Signalen von oder zur Benutzerschnittstelle (12) mindestens ein Optokoppler (30, 34, 36) vorgesehen ist.

5. Anordnung nach Anspruch 4, bei welcher die Signale über den mindestens einen Optokoppler (30, 34, 36) in digitalisierter Form übertragen werden.

6. Anordnung nach einem oder mehreren der vorhergehenden Ansprüche, bei welcher das vorgegebene Signal der Vergleicheranordnung (90) in der Benutzerschnittstelle (12) in Form eines externen Gleichspannungssignals (N_{SOLL}) zuführbar ist .

7. Anordnung nach einem oder mehreren der vorhergehenden Ansprüche, bei welcher das vorgegebene Signal der Benutzerschnittstelle (12) in Form eines externen PWM-Signals (N_{SOLL}) zuführbar ist, welches in der Benutzerschnittstelle (12) durch eine Filteranordnung (106, 108) geglättet und dann der Vergleicheranordnung (90) zugeführt wird.

8. Anordnung nach einem oder mehreren der vorhergehenden Ansprüche, bei welcher die Benutzerschnittstelle (12) einen Eingang (32) aufweist, an den ein variabler Widerstand (R) anschließbar ist, mittels dessen das der Vergleichsanordnung (90) zuführbare vorgegebene Signal veränderbar ist, um das Tastverhältnis des pulsweitenmodulierten Signals (NS) am Ausgang der Vergleicheranordnung (90) abhängig von der Größe dieses Widerstands (R) zu verändern.

## Claims

1. Arrangement with an electronically commutated motor (16) which in operation is supplied with a direct-current voltage (U_{ZK}) of over 100 V from an alternating-current mains supply (L, N) via a rectifier (52) connected to the latter and a direct-current intermediate circuit (22, 58) connected to this rectifier (52),
with an arrangement (25, 27) fed from this alternating-current mains supply (L, N) via a transformer (24) to supply electronic elements (14, 20, 26) of the motor (16) with a direct-current voltage,
with a user interface (12) which is provided to control the motor (16) and is galvanically isolated from the motor (16) and has a power supply (24b) galvanically isolated from the motor (16),
with a comparator arrangement (90) which is provided in the user interface (12) and to which a pulsating direct-current voltage produced by rectification of an alternating-current voltage from the mains supply is supplied and there compared with a predetermined signal (R; N_{SET}) in order to produce a pulse width modulated signal (NS) the pulse duty cycle of which is defined by the predetermined signal (R; N_{SET}),
and with a device for galvanically isolated transmission of this pulse width modulated signal (NS) from the user interface (12) to the motor (16).

2. Arrangement according to claim 1, in which the transformer (24) exhibits an isolated winding chamber (70) in which a separate low-voltage winding (24b) is provided which serves to provide a galvanically isolated power supply to the user interface (12).

3. Arrangement according to claim 2, in which the output voltage of the separate low-voltage winding (24b) can be fed to a rectifier (74) and from this in the form of a rectified pulsating direct-current voltage and in the form of a smoothed direct-current voltage to the user interface (12) (fig. 2).

4. Arrangement according to one or more of the preceding claims, in which at least one optocoupler (30, 34, 36) is provided for galvanically isolated transmission of signals from or to the user interface (12).

5. Arrangement according to claim 4, in which the signals are transmitted via the at least one optocoupler (30, 34, 36) in digitised form.

6. Arrangement according to one or more of the preceding claims, in which the predetermined signal can be fed to the comparator arrangement (90) in the user interface (12) in the form of an external direct-current voltage signal (N_{SET}).

7. Arrangement according to one or more of the preceding claims, in which the predetermined signal can be fed to the user interface (12) in the form of an external PWM signal (N_{SET}) which is smoothed in the user interface (12) by a filter arrangement (106, 108) and then fed to the comparator arrangement (90).

8. Arrangement according to one or more of the preceding claims, in which the user interface (12) exhibits an input (32) to which a variable resistor (R) can be connected by means of which the predetermined signal which can be fed to the comparator arrangement (90) can be changed in order to change the pulse duty cycle of the pulse width modulated signal (NS) at the output of the comparator arrangement (90) depending on the magnitude of this resistor (R).

## Revendications

1. Dispositif équipé d'un moteur (16) commuté électroniquement, lequel est alimenté en service à partir d'un réseau de courant alternatif (L, N) au moyen d'un redresseur (52) raccordé à ce réseau et d'un circuit intermédiaire à courant continu (22, 58) raccordé à ce redresseur (52) avec une tension continue (U_{ZK}) supérieure à 100 V, d'un dispositif (25, 27) alimenté au moyen d'un transformateur (24) à partir de ce réseau de courant alternatif (L, N) pour l'alimentation d'éléments (14, 20, 26) électroniques du moteur (16) avec une tension continue, d'une interface utilisateur (12) prévue pour la commande du moteur (16), qui est séparée galvaniquement du moteur (16) et à laquelle est attribuée une alimentation électrique (24b) séparée galvaniquement du moteur (16), d'un dispositif comparateur (90) prévu dans l'interface utilisateur (12), auquel est amenée une tension continue ondulée générée par le redressement d'une tension alternative dépendante du réseau qui est comparée à cet endroit avec un signal (R ; N_{THEORIQUE}) prédéfini, afin de générer un signal (NS) avec modulation d'impulsion en largeur, dont le taux d'impulsions est défini par le signal (R ; N_{THEORIQUE}) prédéfini, et d'un appareil pour la transmission galvaniquement séparée de ce signal (NS) avec modulation d'impulsion en largeur de l'interface utilisateur (12) au moteur (16).

2. Dispositif selon la revendication 1, sur lequel le transformateur (24) présente une chambre d'enroulement (70) isolée, dans laquelle il est prévu un enroulement de basse tension (24b) séparé, qui sert à l'alimentation électrique galvaniquement séparée de l'interface utilisateur (12).

3. Dispositif selon la revendication 2, sur lequel la tension de sortie de l'enroulement séparé de basse tension (24b) peut être amenée à un redresseur (74) et de celui-ci à l'interface utilisateur sous la forme d'une tension continue ondulée et redressée et sous la forme d'une tension continue lissée (figure 2).

4. Dispositif selon l'une quelconque ou plusieurs des revendications précédentes, sur lequel il est prévu au moins un optocoupleur (30, 34, 36) pour la transmission galvaniquement séparée de signaux venant de l'interface utilisateur (12) ou allant à celle-ci.

5. Dispositif selon la revendication 4, sur lequel les signaux sont transmis sous forme numérisés au moyen d'au moins un optocoupleur (30, 34, 36).

6. Dispositif selon l'une quelconque ou plusieurs des revendications précédentes, sur lequel le signal prédéfini peut être amené au dispositif comparateur (90) dans l'interface utilisateur (12) sous la forme d'un signal externe de tension continue (N_{THEORIQUE}).

7. Dispositif selon l'une quelconque ou plusieurs des revendications précédentes, sur lequel le signal prédéfini peut être amené à l'interface utilisateur (12) sous la forme d'un signal externe avec modulation d'impulsion en largeur (N_{THEORIQUE}), qui est lissé dans l'interface utilisateur (12) par un dispositif filtrant (106, 108), et est amené ensuite au dispositif comparateur (90).

8. Dispositif selon l'une quelconque ou plusieurs des revendications précédentes, sur lequel l'interface utilisateur (12) présente une entrée (32), à laquelle on peut raccorder une résistance (R) variable, au moyen de laquelle le signal prédéfini pouvant être amené au dispositif de comparaison (90) peut être modifié pour faire varier le taux d'impulsions du signal (NS) avec modulation d'impulsion en largeur à la sortie du dispositif comparateur (90) en fonction de la grandeur de cette résistance (R).
